(19) **Europäisches Patentamt / European Patent Office / Office européen des brevets**

(11) **EP 1 203 755 B1**

(12) **EUROPEAN PATENT SPECIFICATION**

(45) Date of publication and mention
of the grant of the patent:
**10.10.2012 Bulletin 2012/41**

(21) Application number: **00940791.7**

(22) Date of filing: **21.06.2000**

(51) Int Cl.:
***C03B 37/012*** *(2006.01)*

(86) International application number:
**PCT/JP2000/004071**

(87) International publication number:
**WO 2000/078686 (28.12.2000 Gazette 2000/52)**

(54) **PRODUCTION METHOD FOR OPTICAL FIBER BASE MATERIAL**

HERSTELLUNGSVERFAHREN FÜR OPTISCHE FASERVORFORMEN

PROCEDE DE FABRICATION DE MATIERE PREMIERE POUR FIBRE OPTIQUE

(84) Designated Contracting States:
**DE**

(30) Priority: **22.06.1999 JP 17495499**
**05.07.1999 JP 19051799**

(43) Date of publication of application:
**08.05.2002 Bulletin 2002/19**

(60) Divisional application:
**11007623.9 / 2 423 170**

(73) Proprietor: **Mitsubishi Cable Industries, Ltd.**
**Amagasaki-shi**
**Hyogo 660-0856 (JP)**

(72) Inventors:
• **ITO, Hideaki,**
**c/o Itami Works**
**Itami-shi,**
**Hyogo 664-0027 (JP)**
• **KON, Masataka,**
**c/o Itami Works**
**Itami-shi,**
**Hyogo 664-0027 (JP)**

• **KINOSHITA, Takaharu,**
**c/o Itami Works**
**Itami-shi,**
**Hyogo 664-0027 (JP)**
• **NAGAE, Nobusada,**
**c/o Itami Works**
**Itami-shi,**
**Hyogo 664-0027 (JP)**

(74) Representative: **Gossel, Hans K.**
**Lorenz-Seidler-Gossel**
**Widenmayerstrasse 23**
**80538 München (DE)**

(56) References cited:
**WO-A1-98/33746** **WO-A1-98/33746**
**GB-A- 1 427 826** **JP-A- 7 010 580**
**JP-A- 7 010 586** **JP-A- 8 012 363**
**JP-A- 55 075 933** **JP-A- 55 090 431**
**JP-A- 55 144 434** **JP-A- 55 144 434**
**US-A- 3 932 162** **US-A- 4 578 096**
**US-A- 4 749 369** **US-A- 4 820 322**
**US-A- 4 820 322**

**Description**

TECHNICAL FIELD

The present invention relates to a method for manufacturing an optical fiber preform, in which a glass rod for the core, or a glass rod for the core and the cladding, is inserted into a glass pipe for the cladding, the pressure inside the glass pipe is reduced while the glass rod and glass pipe are heated, and the glass pipe and the glass rod are formed into a single unit and are elongated.

BACKGROUND ART

JP 7010580 discloses a method for manufacturing an optical fiber preform thereby using a glass are and a glass pipe.

Three methods can be offered as the principle methods for manufacturing optical fiber preforms: OVD (Outside Vapor Deposition), VAD (Vapor-phase Axial Deposition) and MCVD (Modified Chemical Vapor Deposition). From the standpoint of productivity, in VAD and MCVD methods the cladding, which comes to occupy a major portion of the optical fiber preform, is formed around the outer circumference of the glass rod by a separate process after the glass rod for the core or for the core and the cladding has been manufactured.

More specifically, a so-called external adhering method is known as a method for forming the cladding, wherein, for example, fine glass particles called "snoot" are deposited on the glass rod and are heated to make transparent glass.

In contrast, JP S56-45867B, for example, discloses a so-called rod-in-tube method, wherein a glass rod for the core or for the core and the cladding is inserted into a glass pipe for the cladding, which has been manufactured beforehand in a separate process, and the glass pipe and glass rod are formed into a single unit. More specifically, for this rod-in-tube method, a method is known wherein the glass pipe and glass rod are heated by a burner flame so as to press the glass pipe onto the glass rod by the gas of this burner flame, thereby forming the glass pipe and glass rod into a single unit. Moreover, in a different known rod-in-tube method, the pressure within the glass pipe is reduced while the glass pipe and the glass rod are heated by a heating furnace (heater), for example, so as to form the glass pipe and the glass rod into a single unit by the pressure difference between the inside and the outside of the glass pipe.

Optical fiber preforms manufactured by the above manufacturing methods are made into optical fiber by performing a fiber-drawing process, and JP S50-85345A, for example, discloses a method for conducting a fiber-drawing process at the same time that the optical fiber preform is manufactured by a rod-in-tube method.

In recent years, from the standpoint of reducing production costs, for example, in order to meet demands for optical fiber preform of an increased size, optical fiber preforms have been given a large diameter. When an optical fiber preform with a large diameter is drawn into a fiber as is, however, a long period of time is required before it can be stabilized into an optical fiber of a target diameter, and a large amount of preform is consumed.

In light of the above, before an optical fiber preform with a large diameter is drawn into fiber, a diameter reducing process is normally performed to reduce its diameter to the optimal diameter for producing the greatest yield. For example, JP H07-10580A discloses a method for manufacturing an optical fiber preform using the above-mentioned rod-in-tube method and simultaneously reduceing the diameter of that optical fiber preform, so as to improve productivity.

However, when an optical fiber preform is manufactured by forming the glass pipe and a glass rod into a single unit, bubbles or the like may form between the glass pipe and the glass rod. These bubbles increase the transmittance loss and cause the difficulties of uniform connection of the optical fiber, and therefore bubbles must be reliably prevented during the manufacturing of optical fiber preforms. The following first and second problems are related to the prevention of these bubbles.

A first problem relates to the pressure inside of the glass pipe when the glass pipe and the glass rod are formed into a single unit.

That is, one reason why the above-mentioned bubbles occur is because of defects in the inner wall of the glass pipe, and also because of moisture and gas that adheres to the inner wall of the glass pipe. Therefore, to prevent bubbles due to defects, for example, in the inner wall of the glass pipe, the glass rod is normally inserted into the glass pipe after the inner wall of the glass pipe has been thoroughly cleaned and moisture, for example, has been completely removed. Furthermore, to prevent the remaining of gas that has adhered to the inner wall of the glass pipe, when the glass pipe and the glass rod are to be formed into a single unit, the pressure in the glass pipe is set to an extremely low pressure (pressure reduction level is raised), and then the glass pipe and the glass rod are formed into a single unit.

However, if the pressure reduction level within the glass pipe is raised for the purpose of preventing bubbles, then the glass pipe attempts to suddenly reduce its diameter, so that the curvature in the reduced portions becomes large, and the amount of thickness aberration increases. This results in the problem of core eccentricity becoming larger when the glass pipe and the glass rod have been formed into a single unit. Core eccentricity easily becomes particularly large when a large-scale glass pipe, for example a thick-walled glass pipe with a small inner to outer diameter ratio, or a glass pipe with a large outer diameter, is used for the purpose of manufacturing a large optical fiber preform. In order to prevent core eccentricity, it is effective to form the glass pipe and the glass rod into a single unit in a state in which the level of pressure reduction within the glass pipe has been lowered, but if the level of pressure reduction is lowered, there is the risk that bubbles will form within the optical fiber preform as mentioned above.

Thus, the first problem when forming the glass pipe and the glass rod into a single unit to manufacture an optical fiber preform is the conflicting demands for the prevention of bubbles from forming due to defects in the inner wall of the glass pipe, and the prevention of core eccentricity. This first problem is extremely difficult to solve, particularly when manufacturing large-scale optical fiber preforms.

Next, a second problem relates to the gap (clearance) between the glass pipe and the glass rod.

When forming the glass pipe and the glass rod into a single unit to manufacture the optical fiber preform, the glass pipe and the glass rod can be easier formed into a single unit and the core eccentricity when forming the glass pipe and the glass rod into a single unit is smaller if the clearance is small.

However, if the clearance is made small, the glass rod and the glass pipe rub against one another when the glass rod is inserted into the glass pipe, and defects occur in the inner wall of the glass pipe and the outer wall of the glass rod due to this rubbing. This results in the risk that bubbles, for example, may form between the glass pipe and the glass rod. In particular, when a long optical fiber preform is manufactured, a long glass rod is inserted into a long glass pipe, and therefore it becomes extremely difficult to keep the glass rod and the glass pipe from rubbing against one another.

In view of the above, it would seem that the clearance between the glass pipe and the glass rod could be made larger when the glass pipe and the glass rod are formed into a single unit and elongated. Specifically, the following four methods are conceivable.

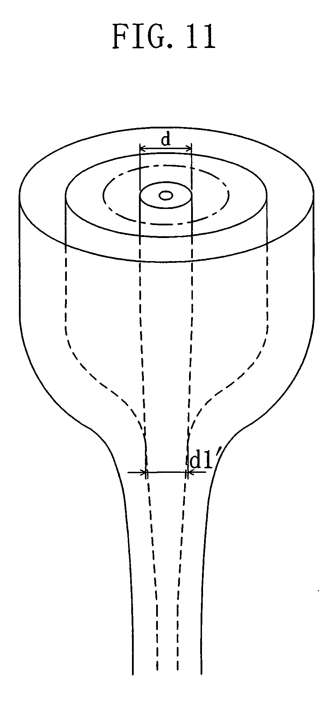

A first method, as shown in Fig. 11, increases the clearance between the glass pipe and the glass rod by using a glass pipe which has the same outer diameter as a conventional glass pipe, and only the inner diameter is larger. The dash-dotted line in Fig. 11 shows the inner diameter of a conventional glass pipe. With this first method, there is the problem that although rubbing between the glass pipe and the glass rod is avoided, the cross section area of the glass pipe becomes small, and the area of the cladding portion is insufficient when the glass pipe and the glass rod are formed into a single unit. That is, the core/cladding ratio (value of the cladding diameter divided by the core diameter, hereinafter abbreviated as C/C) of the optical fiber preform must be a predetermined value, and the cross section area of the glass pipe must correspond to the cross section area of the core in the glass rod. With the first method, to set the C/C of the completed optical fiber preform to a predetermined value, the glass pipe having an insufficient amount of cross section area must be provided with additional coats, and therefore it is necessary to carry out glass pipe coating two or more times. For this reason, there is the problem that together with an increase in production costs, the increase in the number of coats raises the risk that bubbles will form in the interface of the additionally coated glass pipe, and therefore the preform will become defective.

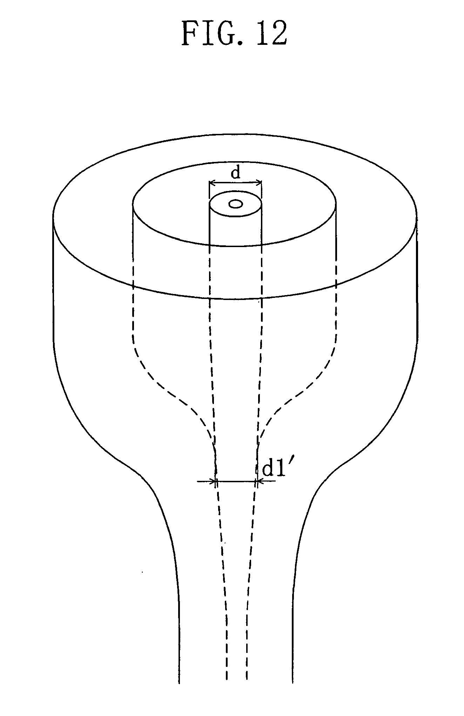

In a second method, as shown in Fig. 12, the clearance between the glass pipe and the glass rod is increased by using a glass pipe which has the same cross section area as a conventional glass pipe, but has a larger inner and outer diameter. With this second method, although rubbing between the glass pipe and the glass rod is avoided, the diameter of the glass pipe must be significantly reduced until the inner diameter of the glass pipe becomes the outer diameter of the glass rod. For this reason, there is the risk that the glass pipe will not uniformly reduce its diameter, thus increasing the amount of core eccentricity in the optical fiber preform. Moreover, because the cross section area of the glass pipe is the same as that of a conventional glass pipe, the outer diameter increases in proportion to the amount that the inner diameter is increased. In particular, when manufacturing optical fibers in which the cladding is large with respect to the core, such as single mode optical fibers, it is necessary to use a glass pipe that has a large cross section area, and thus the glass pipe comes to have an even larger outer diameter. In this case, in addition to the occurrence of the above-mentioned problems, there is the problem that large glass pipes are difficult to obtain and expensive, and because the glass pipe has a large outer diameter, there is also the problem that manufacturing equipment such as the heating furnace must also be large, thereby resulting in increased equipment costs and operating costs.

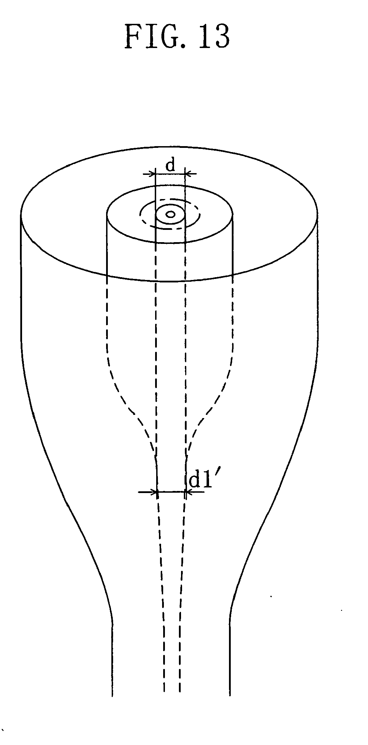

In a third method, as shown in Fig. 13, the clearance between the glass pipe and the glass rod is increased by elongating the glass rod to reduce its diameter, rather than increase the inner diameter of the glass pipe. The dash-dotted line in Fig. 13 indicates the outer diameter of a conventional glass rod. Also in this third method, although rubbing between the glass pipe and the glass rod is avoided, the cross section area of the glass pipe becomes too large with respect to the cross section area of the core in the glass rod, and it becomes difficult to set the C/C of the completed optical fiber preform to a predetermined value. That is, the cross section area of the core in the glass rod becomes smaller by elongating the glass rod, and thus the required cross section area of the glass pipe also becomes smaller. However, because the glass pipe has the same cross section area as a conventional glass pipe, if the glass pipe and the glass rod are formed into a single unit and are elongated, the C/C of the completed optical fiber preform significantly exceeds the predetermined value. In order to set the C/C of this optical fiber preform to the predetermined value it would seem that unnecessary portions on the glass pipe could be removed by flame polishing, for example, but if portions of the glass pipe are removed, the optical fiber preform is reduced in size. Moreover, by requiring a heretofore unnecessary flame polishing step, the number of production steps is increased, thereby leading to an increase in production costs. Note that if a glass pipe is used that has a cross section area corresponding to the diameter of the elongated glass rod, an optical fiber preform with the predetermined C/C can be obtained, but there is the problem that in this case the optical fiber preform is reduced in size and productivity is lowered.

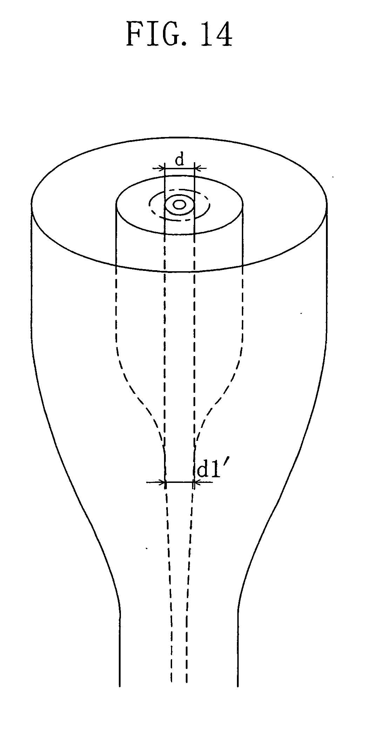

A fourth method is conceivable particularly for the manufacturing of optical fiber preforms for a single mode optical fiber, and as shown in Fig. 14, this method secures clearance between the glass pipe and the glass rod not by elongating the glass rod, but rather by removing the cladding portion of the glass rod to reduce its outer diameter while maintaining the diameter of the core. Also with this fourth method, rubbing between the glass pipe and the glass rod can be avoided, but the losses in the optical fiber that is drawn out from the completed optical fiber perform are high. That is, there may be residual OH groups, which absorb the signal light that propagates through the optical fiber core, at the interface between the glass rod and the glass pipe in the optical fiber preform. In consideration of the above, normally the outer diameter of the glass rod is made large so as to provide distance between the interface of the glass rod and the glass pipe, and the core, and thus, even if there are residual OH groups at the interface of the glass rod and the glass pipe, the optical fiber is not easily affected by the effects of signal light absorption by these OH groups. For example, when manufacturing an optical fiber preform for a 1.3 $\mu$m band single mode optical fiber, the outer diameter of the glass rod must be approximately 3.6 times (C/C 3.6) or more than the outer diameter of the core in the glass rod, and normally the glass rod which is used has a C/C of approximately 4. However, when the cladding portion of the glass rod is removed as in this fourth method, the above-mentioned interface becomes closer to the core, and there are higher losses in the optical fiber due to the absorption of signal light by residual OH groups at the interface.

Thus, a second problem when forming a glass pipe and a glass rod into a single unit to manufacture an optical fiber preform is that even if the above-mentioned first through fourth methods are used to give an increased clearance and prevent the formation of bubbles, the result is an increase in the amount of core eccentricity and a drop in productivity, among other problems, and it becomes extremely difficult to prevent these problems as well.

An object of the present invention is to prevent the formation of bubbles during the manufacturing of optical fiber preforms in which a glass pipe and a glass rod are formed into a single unit and elongated, and in particular, it is an object of the present invention to solve the first and second problems related to preventing the formation of bubbles.

DISCLOSURE OF THE INVENTION

First, to solve the above-mentioned first problem, the inventors repeatedly performed experiments focusing on aspects such as the pressure reduction level in the glass pipe, the heating temperature, and the feed rate of the glass pipe and the glass rod into the heating furnace. The result was the finding of conditions for manufacturing an optical fiber preform wherein both the formation of bubbles and core eccentricity could be reliably prevented, thus conceiving of a first invention.

That is, it was found that when the glass pipe and the glass rod are formed into a single unit and are elongated, it is particularly important that the pressure reduction level in the glass pipe is optimized to prevent both the formation of bubbles and core eccentricity. In light of this, the inventors repeatedly performed experiments with a focus on this pressure reduction level, and from those results found the pressure reduction level in the glass pipe at which core eccentricity does not occur and the formation of bubbles can be reliably prevented, or in other words, found the optimal pressure reduction level. Then, when the glass pipe and the glass rod were formed into a single unit and elongated using this optimal pressure reduction level, it was found that either the glass pipe or the glass rod, or both, were elongated before forming into a single unit, and then the glass rod and the glass pipe formed into a single unit. For example, when the pressure reduction level is too high, the glass pipe and the glass rod are elongated after they have formed into a single unit, in which case it becomes easy for core eccentricity to occur, as mentioned above. On the other hand, when the pressure reduction level is too low, the glass pipe and the glass rod are not formed into a single unit, and after they have both been sufficiently elongated they tend to form into a single unit, but in this case they are not completely formed into a single unit. In contrast, at an optimal pressure reduction level, the glass pipe and the glass rod are formed into a single unit after the glass pipe or the glass rod, or both, have been elongated. Moreover, it was confirmed that both the formation of bubbles and core eccentricity are reliably prevented when the glass pipe and the glass rod are formed into a single unit after the glass pipe or the glass rod, or both, have been elongated. Furthermore, it was confirmed that both the formation of bubbles and core eccentricity are reliably prevented even when a glass pipe with a large diameter or a glass pipe with a thick wall is used, thus conceiving of a first invention.

More specifically, the first invention is for a method for manufacturing an optical fiber preform, wherein a glass rod for the core or a glass rod for the core and the cladding is inserted into a glass pipe for the cladding, the pressure in the glass pipe is reduced while the glass pipe and the glass rod are heated, and the glass pipe and the glass rod are formed into a single unit and are elongated.

Then, the glass pipe and the glass rod are formed into a single unit after the glass pipe or the glass rod, or both, has been elongated, after which the glass pipe and glass rod that have been formed into a single unit are elongated until the outer diameter of the glass pipe becomes a predetermined diameter.

Here, the value of the optimal pressure reduction level depends on the temperature conditions of the heating furnace that heats the glass pipe and the glass rod, and the shape of the glass pipe and the glass rod, for example the size of the gap between the glass pipe and the glass rod. For that reason, it is difficult to regulate all optimal manufacturing conditions with the pressure reduction level. In light of this problem, the inventors found that optical manufacturing conditions can be set if the distance with respect to the longitudinal direction of the glass pipe and the glass rod is utilized, instead of regulating the above-mentioned pressure reduction level, thus conceiving of a second invention.

More specifically, the second invention is characterized in that when the length from the position at which the glass pipe or the glass rod, or both, begin to be elongated to the position at which the glass pipe and the glass rod are formed into a single unit is $L1$, and the length from the position at which the glass pipe and the glass rod are formed into a single unit to the position at which the glass pipe and the glass rod are elongated so that the outer diameter of the glass pipe becomes a predetermined diameter is $L2$, then the glass pipe and the glass rod are formed into a single unit and are elongated so as to satisfy the equation $0.1 \leqq L1/(L1+L2) \leqq 0.8$.

Furthermore, the inventors found that the amount of core eccentricity also depends on the size of the clearance. For example, when there is a large clearance, the curvature of the glass pipe increases when the glass pipe diameter is reduced by shrinking, and thus core eccentricity easily occurs. Then, the optimal manufacturing conditions obtained by regulating the clearance were found, and thus a third invention was achieved.

More specifically, the third invention is characterized in that when the outer diameter of the glass pipe is $D0$ and the inner diameter of the glass pipe is $d0$, the outer diameter of the glass pipe is $D1$ and the inner diameter of the glass pipe is $d1$ at the position where the glass pipe and the glass rod become a single unit, then the glass pipe and the glass rod are formed into a single unit and elongated so as to satisfy the equation $(d0/D0)/(d1/D1) \leqq 2$.

For example, when the value of $(d0/D0)/(d1/D1)$ is large, that is, when there is a large clearance, there is the risk that the curvature of the reduced glass pipe diameter will increase and cause core eccentricity, however, core eccentricity can be reliably prevented by setting the value of $(d0/D0)/(d1/D1)$ to 2 or less, as in the above-mentioned third invention.

The method for manufacturing an optical fiber preform according to the first through third inventions is also suited for the manufacturing of large-scale optical fiber preform, so that it becomes possible to manufacture an optical fiber preform while preventing the formation of bubbles and core eccentricity even when, for example, a thick-walled glass pipe with an inner to outer diameter ratio of 0.5 or less is used, or a glass pipe with a large outer diameter of 48 mm or more is used.

BRIEF DESCRIPTION OF THE DRAWINGS

Fig. **1** is a perspective view illustrating how an optical fiber preform is manufactured.

Fig. **2** is a perspective view showing how the glass pipe and the glass rod being are formed into a single unit by the method for manufacturing an optical fiber preform according to the first embodiment.

Fig. **3** is a diagram that corresponds to Fig. **2** and shows how the glass pipe and the glass rod are formed into a single unit by a conventional method for manufacturing an optical fiber preform.

Fig. **4** shows the experimental results of an evaluation of the bubbles inside an optical fiber preform, and the amount of measured core eccentricity in the optical fiber drawn out from an optical fiber preform, when manufacturing the optical fiber preforms at various $L1/(L1+L2)$ values.

Fig. **5** shows the experimental results of an evaluation of the bubbles inside an optical fiber preform, and the amount of measured core eccentricity in the optical fiber drawn out from an optical fiber preform, when manufacturing optical fiber preforms at various $(d0/D0)/(d1/D1)$ values.

Fig. **6** is a diagram that corresponds to Fig. 2 and shows how the glass pipe and the glass rod are formed into a single unit when there is a small clearance.

Fig. **7** is a diagram that corresponds to Fig. 2 and shows how the glass pipe and the glass rod are formed into a single unit when there is a large clearance.

Fig. **8** is a diagram showing the amount of core eccentricity and the number of formed bubbles as a function of $L1/(L1+L2)$, as obtained by experiment.

Fig. **9** is a diagram showing the amount of core eccentricity as a function of $(d0/D0)/(d1/D1)$, as obtained by experiment.

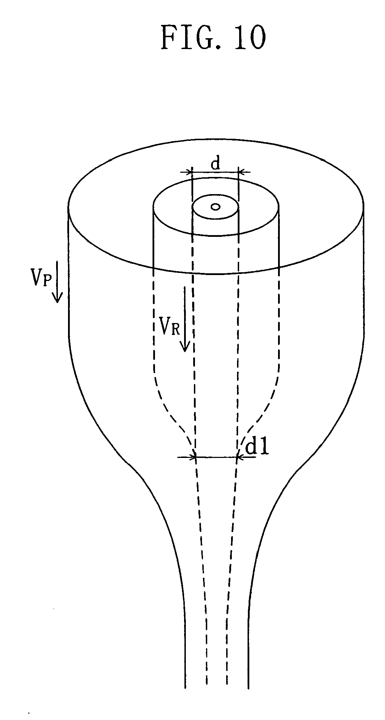

Fig. **10** is a diagram that corresponds to Fig. **2** and shows how the glass pipe and the glass rod are formed into a single unit by the method for manufacturing an optical fiber preform according to the second embodiment, which is not part of this invention.

Fig. **11** is a diagram corresponding to Fig. 2 and shows how the glass pipe and the glass rod how formed into a single unit when a glass pipe having a large inner diameter is used.

Fig. **12** is a diagram corresponding to Fig. **2** and shows how the glass pipe and the glass rod are formed into a single unit when a glass pipe having a large inner and outer diameter is used.

Fig. **13** is a diagram corresponding to Fig. **2** and shows how the glass pipe and the glass rod are formed into a single unit when a glass rod having an outer diameter that has been reduced by elongating is used.

Fig. **14** is a diagram corresponding to Fig. **2** and shows how the glass pipe and the glass rod are formed into a single unit when the glass rod that is used has an outer diameter that has been reduced by removing the cladding portion.

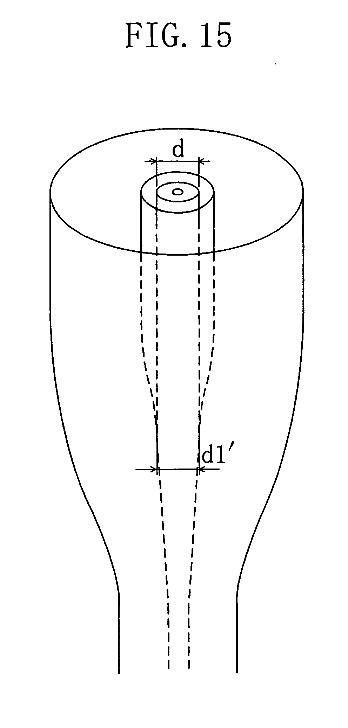

Fig. **15** is a diagram corresponding to Fig. **2** and shows how the glass pipe and the glass rod are formed into a single unit when there is a small clearance.

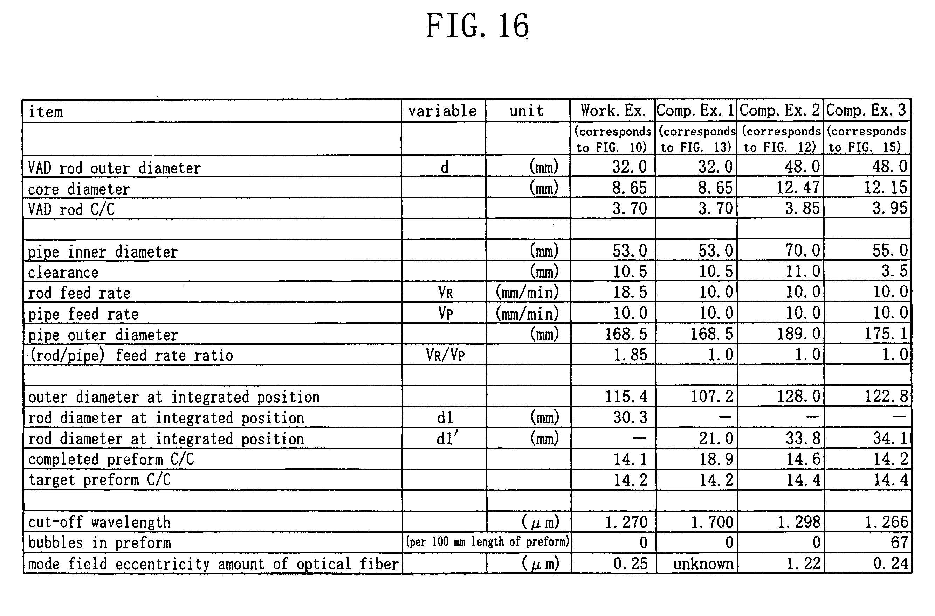

Fig. **16** shows the experimental results, which are not part of this invention, of an evaluation of the bubbles inside an optical fiber preform, and the amount of measured core eccentricity in the optical fiber drawn out from an optical fiber preform, in a case wherein optical fiber preforms were manufactured at various clearances and glass rod feed rates.

BEST MODE FOR CARRYING OUT THE INVENTION

First Embodiment

The first embodiment corresponds to the first through third inventions.

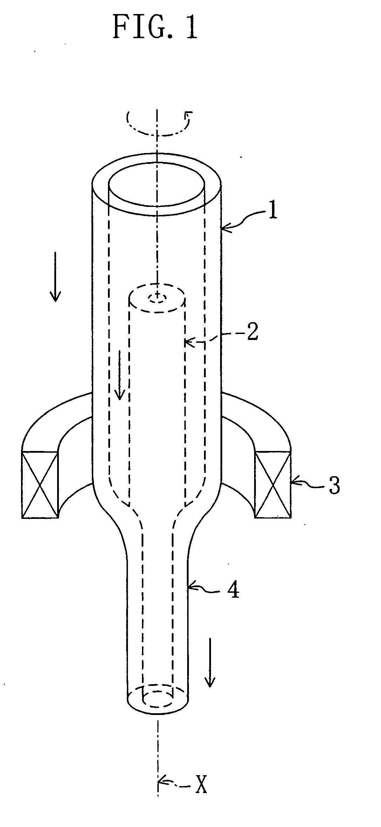

Fig. 1 illustrates the state during the manufacturing of an optical fiber preform according to the first embodiment. Numeral 1 denotes a glass pipe for the cladding, numeral 2 denotes a glass rod for the core or for the core and the cladding, and numeral **3** denotes a heater for heating both the glass pipe **1** and the glass rod **2**. For the glass pipe **1**, it is possible to use a glass pipe that has been manufactured by OVD, for example. Furthermore, the glass rod **2** can be a glass rod made by sintering a deposit of fine glass particles that have been deposited by the VAD method, or a glass rod made by forming and solidifying core glass on the inner wall of a cladding pipe by MCVD. Furthermore, for the furnace provided with the heater **3**, more specifically a carbon resistance furnace or a high-frequency induction furnace can be used.

The manufacturing procedure of the optical fiber preform is explained next. First, in a state wherein the upper ends of the glass pipe **1** and the glass rod **2** are held by a holding device, which has been omitted from the drawings, the glass rod **2** is inserted into the glass pipe **1** such that it is coaxial with the glass pipe **1**. Then, while the pressure inside the glass pipe **1** is reduced by a pressure reducing device, which has been omitted from the drawings, the glass pipe **1** and the glass rod **2** are moved downward by the holding device such that they are positioned within the heater **3** (see arrows in Fig. 1).

The glass pipe **1** and the glass rod **2** are heated by the heater **3**, and once the glass pipe **1** has melted, the difference in pressure inside and outside the glass pipe **1** causes the glass pipe **1** and the glass rod **2** to become a single unit. Formed into a single unit, the optical fiber preform **4** is drawn by a drawing device (omitted from the drawings) provided below the heater, and is elongated downwards (see arrows in Fig. **1**), and thus the glass pipe **1** and the glass rod **2** are formed into a single unit at the same time that the optical fiber preform **4** is elongated.

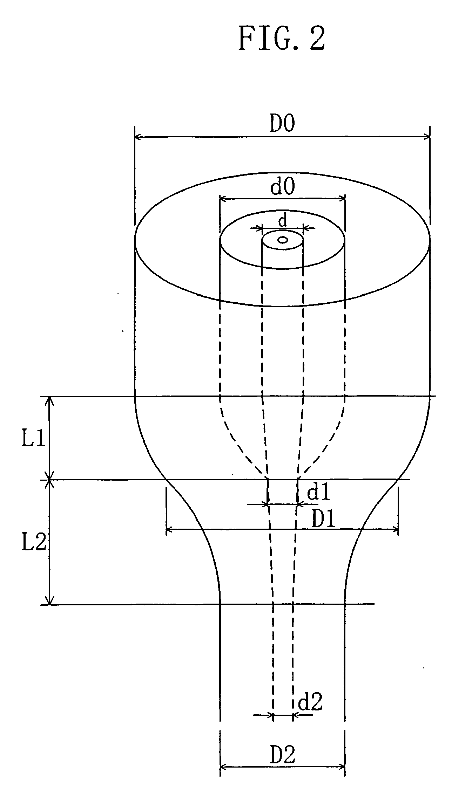

In the first embodiment, as shown in Fig. 2, by adjusting the level of pressure reduction within the glass pipe **1**, the glass rod **2** is pre-elongated before the glass pipe **1** and the glass rod **2** are formed into a single unit, and then the glass pipe **1** and the glass rod **2** are formed into a single unit. This means that the glass rod **2** begins to elongate at a position that is above the position at which the glass pipe **1** and the glass rod **2** become a single unit (see *L1* in Fig. **2**). Note that *L2* in the drawing shows the length between the position at which the glass pipe **1** and the glass rod **2** become a single unit, and the position at which the outer diameter of the glass pipe **1** becomes a predetermined diameter D2 due to the elongating of the glass pipe **1** and the glass rod **2** which have been formed into one unit.

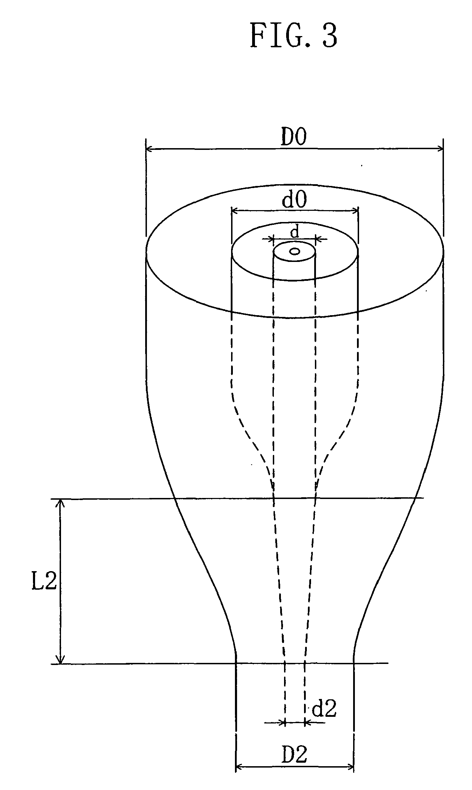

On the other hand, Fig. **3** shows how the glass pipe **1** and the glass rod **2** are formed into one unit in accordance with a conventional optical fiber manufacturing method. In this case, the glass pipe **1** and the glass rod **2** become a single unit with neither of them being elongated, and the optical fiber preform **4** is elongated only after they have been formed into one unit, and therefore there is no *L1*.

The following is a description of an experiment that was conducted with method for manufacturing an optical fiber preform according to the first embodiment.

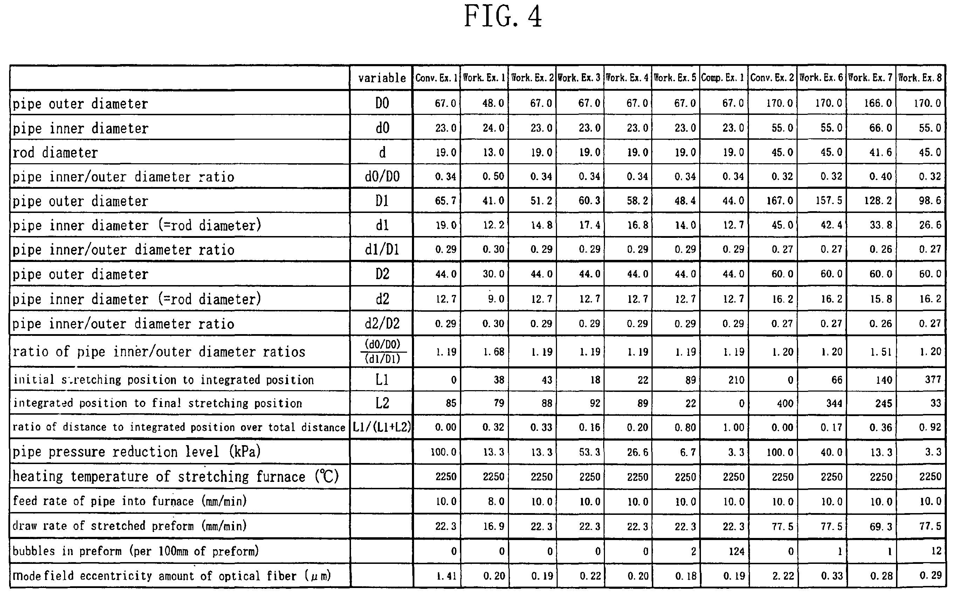

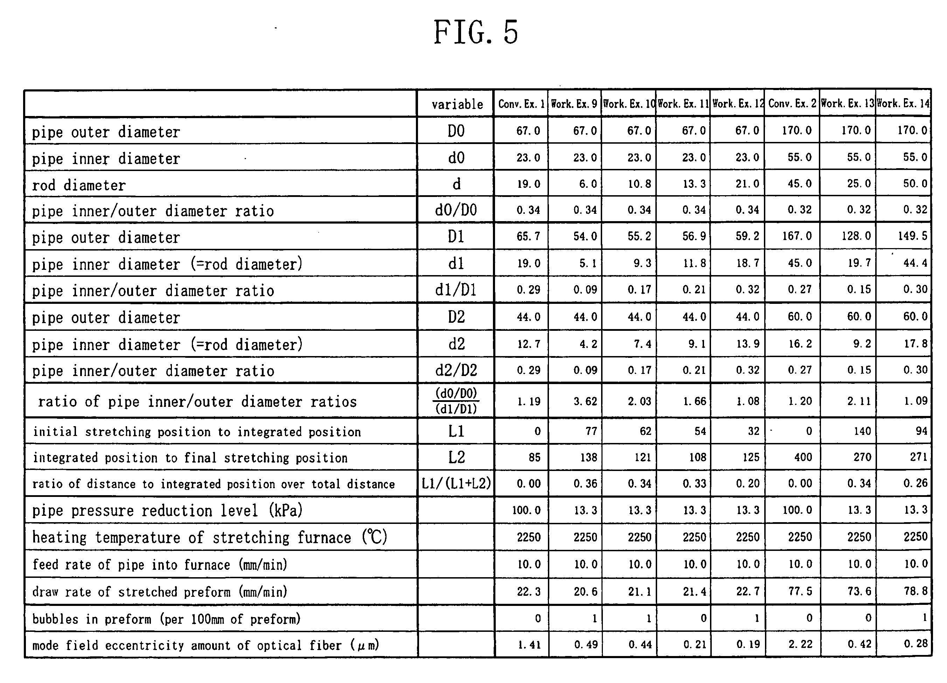

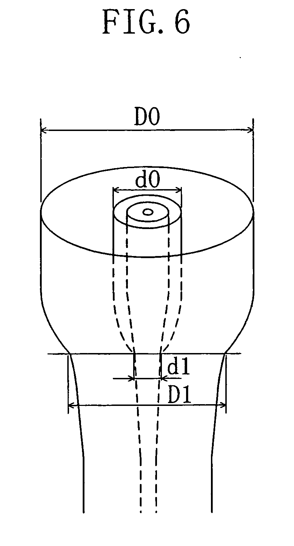

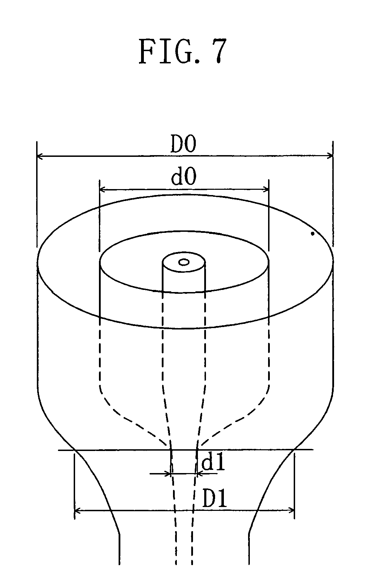

Fig. **4** shows the experimental results of an evaluation regarding bubbles formed in the optical fiber preform **4**, and the amount of core eccentricity in the optical fiber drawn out from the optical fiber preform **4**, when the optical fiber preform **4** was manufactured using various glass pipes **1** and glass rods **2**, and the value of *L1/(L1+L2)* as the parameter was changed by altering the pressure reduction level within the glass pipe **1**. Fig. **5** shows the experimental results of an evaluation regarding bubbles formed in the optical fiber preform **4**, and the amount of core eccentricity in the optical fiber, when the optical fiber preform **4** was manufactured using various glass pipes 1 and glass rods **2**, when the gap (clearance: ($d0/D0$) / ($d1/D1$)) between the glass pipe **1** and the glass rod **2** is small (see Fig. **6**), and when the clearance is large (see Fig. **7**).

Here, $D0$ and $d0$ are the outer diameter and inner diameter of the glass pipe **1** before elongating, $D1$ and $d1$ are the outer diameter and inner diameter of the glass pipe **1** at the position of integration, and $D2$ and $d2$ are the outer diameter (optical fiber preform diameter) and inner diameter of the glass pipe **1** when the elongating operation is finished. Furthermore, $d$ is the outer diameter of the glass rod **2** before elongating.

Working Examples 1 to 8 in Fig. **4** are examples in which the optical fiber preform **4** was manufactured by adjusting the level of pressure reduction within the glass pipe **1** so as to pre-elongate the glass rod **2** before the glass pipe **1** and the glass rod **2** are formed into a single unit (see Fig. **2**), and of Working Examples **1** to **8**, in Working Examples **1** to **5**, the glass pipe **1** has a relatively small outer diameter $D0$, whereas in Working Examples **6** to **8**, the glass pipe **1** has a relatively large outer diameter $D0$.

Furthermore, Working Examples **9** to **14** in Fig. **5** are examples in which the optical fiber preform **4** was manufactured by adjusting the pressure reduction levels within the glass pipe **1** so as to pre-elongate the glass rod **2** before the glass pipe **1** and the glass rod **2** are formed into a single unit, and of Working Examples **9** to **14**, in Working Examples **9** to **12**, the outer diameter $D0$ of the glass pipe **1** is relatively small, whereas in Working Examples .**13** and **14**, the outer diameter $D0$ of the glass pipe **1** is relatively large.

On the other hand, in Conventional Examples **1** and **2**, neither the glass pipe **1** nor the glass rod **2** are pre-elongated before they are formed into a single unit, and the optical fiber preform **4** is manufactured by elongating the glass pipe **1** and the glass rod **2** only after they have become a single unit (see Fig. **3**). In Conventional Example **1**, the outer diameter $D0$ of the glass pipe **1** is relatively small, whereas in Conventional Example **2**, the outer diameter $D0$ of the glass pipe **1** is relatively large.

Moreover, in Comparative Example **1** in Fig. **4,** the level of pressure reduction in the glass pipe **1** is small, and the glass pipe **1** and the glass rod **2** were not completely formed into a single unit ($L2$=0).

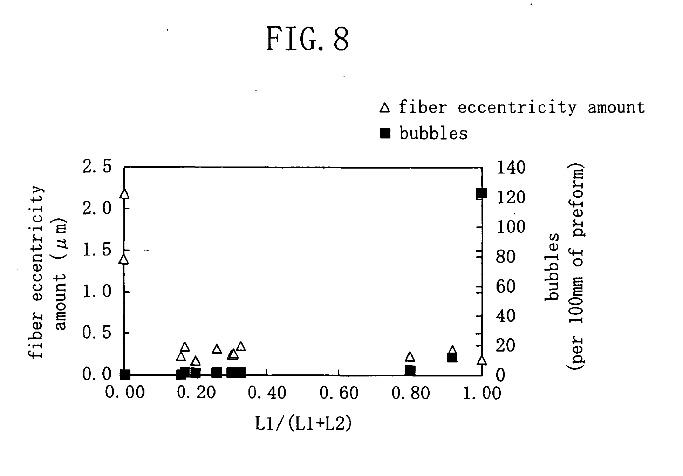

Fig. 8 is a diagram based on Fig. **4** and Fig. **5,** in which the value of $L1/(L1+L2)$ is plotted along the horizontal axis, and the number of bubbles formed in the optical fiber preform (black squares) and the amount of core eccentricity of the optical fiber (white triangles) are plotted along the vertical axis. From Fig. **8,** it can be seen that if the value of $L1/(L1+L2)$ is at least 0.1 and not more than 0.8, then the formation of bubbles and core eccentricity are both prevented. This trend is the same even when the outer diameter $D0$ of the glass pipe **1** is large, as in Working Examples **6** and **7**, for example, and it was found that the formation of bubbles and core eccentricity were reliably prevented even when the glass pipe **1** had a large diameter (large $D0$) or was thick walled (small $d0/D0$).

From the above results, it was possible to confirm that the optical fiber preform **4** can be manufactured under the prevention of bubbles and eccentricity by elongating the glass pipe **1** and the glass rod **2** and forming them into a single unit such that $0.1 \leqq L1/(L1+L2) \leqq 0.8$.

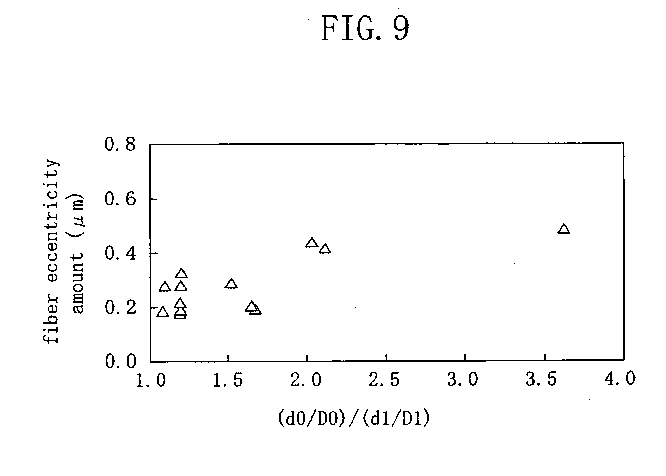

Fig. 9 is also a diagram based on Fig. **4** and Fig. **5**, in which the value of ($d0/D0$)/($d1/D1$) is plotted on the horizontal axis, and the amount of core eccentricity is plotted on the vertical axis. From Fig. **9**, it was found that core eccentricity is prevented if the value of ($d0/D0$)/($d1/D1$) is not larger than **2**, that is, when there is a relatively small clearance.

From the above results, it was possible to confirm that the optical fiber preform **4** can be manufactured under prevention of core eccentricity by forming the glass pipe **1** and the glass rod **2** into one unit and elongating them such that ($d0/D0$)/($d1/D1$) $\leqq$ **2**.

It should be noted that with the method for manufacturing an optical fiber preform according to the first embodiment, the same effects can also be obtained if the glass pipe **1** and the glass rod **2** are elongated upward, opposite from the illustration in Fig. **1**.

**Claims**

1. A method for manufacturing an optical fiber preform, wherein a glass rod for a core or a glass rod for the core and a cladding is inserted into a glass pipe for the cladding, pressure in the glass pipe is reduced while the glass pipe and the glass rod are heated, and the glass pipe and the glass rod are formed into a single unit and elongated, the method for manufacturing an optical fiber preform comprising:

   forming the glass pipe and the glass rod into a single unit after the glass pipe or the glass rod, or both, has been elongated, and then elongating the glass pipe and glass rod that have been formed into a single unit, until the outer diameter of the glass pipe becomes a predetermined diameter.

2. The method for manufacturing an optical fiber preform according to claim 1, wherein the length from a position at which the glass pipe or the glass rod, or both, begin to elongate to a position at which the glass pipe and the glass rod become a single unit is *L1*, and
the length from the position at which the glass pipe and the glass rod become a single unit to the position at which the glass pipe and the glass rod have elongated so that the outer diameter of the glass pipe becomes a predetermined diameter is *L2*, then
the glass pipe and the glass rod are formed into a single unit and elongated so as to satisfy the equation:

$$0.1 \leqq L1/(L1+L2) \leqq 0.8.$$

3. The method for manufacturing an optical fiber preform according to claim 1 or claim 2,
wherein if the outer diameter of the glass pipe is *D0* and the inner diameter of the glass pipe is *d0*, and
if the outer diameter of the glass pipe is *D1* and the inner diameter of the glass pipe is *d1* at the position at which the glass pipe and the glass rod become a single unit, then
the glass pipe and the glass rod are formed into a single unit and are elongated so as to satisfy the equation:

$$(d0/D0)/(d1/D1) \leqq 2.$$

**Patentansprüche**

1. Verfahren zum Herstellen einer Glasfaser-Preform, wobei ein Glasstab für einen Kern oder ein Glasstab für den Kern und eine Ummantelung in ein Glasrohr für die Ummantelung eingebracht wird, Druck in dem Glasrohr reduziert wird, während das Glasrohr und der Glasstab erhitzt werden, und das Glasrohr und der Glasstab zu einer einzigen Einheit ausgebildet und gestreckt werden, wobei das Verfahren zum Herstellen einer Glasfaser-Preform umfasst:

Ausbilden des Glasrohrs und des Glasstabs zu einer einzigen Einheit, nachdem das Glasrohr oder der Glasstab oder beide gestreckt wurden, und dann Strecken des Glasrohrs und des Glasstabs, die zu einer einzigen Einheit ausgebildet wurden, bis der Außendurchmesser des Glasrohrs ein vorbestimmter Durchmesser wird.

2. Verfahren zum Herstellen einer Glasfaser-Preform nach Anspruch 1,
wobei die Länge von einer Stelle, an der das Glasrohr oder der Glasstab oder beide sich zu strecken beginnen, zu einer Stelle, an der das Glasrohr und der Glasstab zu einer einzigen Einheit werden, *L1* ist, und
die Länge von der Stelle, an der das Glasrohr und der Glasstab zu einer einzigen Einheit werden, zu der Stelle, an der sich das Glasrohr und der Glasstab gestreckt haben, so dass der Außendurchmesser des Glasrohrs ein vorbestimmter Durchmesser wird, *L2* ist, dann
das Glasrohr und der Glasstab zu einer einzigen Einheit ausgebildet und gestreckt werden, um die Gleichung:

$$0{,}1 \leq L1/(L1+L2) \leq 0{,}8$$

zu erfüllen.

3. Verfahren zum Herstellen einer Glasfaser-Preform nach Anspruch 1 oder 2,
wobei, wenn der Außendurchmesser des Glasrohrs *D0* ist und der Innendurchmesser des Glasrohrs *d0* ist und wenn an der Stelle, an der das Glasrohr und der Glasstab zu einer einzigen Einheit werden, der Außendurchmesser des Glasrohrs *D1* ist und der Innendurchmesser des Glasrohrs *d1*, dann
das Glasrohr und der Glasstab zu einer einzigen Einheit ausgebildet und gestreckt werden, um die Gleichung:

$$(d0/D0) / (d1/D1) \leq 2$$

zu erfüllen.

**Revendications**

1. Méthode de fabrication d'une ébauche en fibre optique, dans laquelle une tige en verre destinée à un noyau ou une tige en verre destinée au noyau et un placage sont insérés dans un tube en verre pour le placage, la pression dans le tube en verre est réduite tandis que le tube en verre et la tige en verre sont chauffés, et le tube en verre et la tige en verre sont façonnés et allongés en une unité unique, la méthode de fabrication d'une ébauche en fibre optique comprenant :

   le façonnage du tube en verre et de la tige en verre en une unité unique après que le tube en verre ou la tige en verre, ou les deux, ont été allongés, et puis l'allongement du tube en verre et de la tige en verre qui ont été façonnés en une unité unique, jusqu'à ce que le diamètre extérieur du tube en verre devienne un diamètre prédéterminé.

2. Méthode de fabrication d'une ébauche en fibre optique selon la revendication 1,
   dans laquelle la longueur d'une position à laquelle le tube en verre, ou la tige en verre, ou les deux, commencent à s'allonger à une position à laquelle le tube en verre et la tige en verre deviennent une unité unique, est de L1, et la longueur de la position à laquelle le tube en verre et la tige en verre deviennent une unité unique à la position à laquelle le tube en verre et la tige en verre ont été allongés de sorte que le diamètre extérieur du tube en verre devienne un diamètre prédéterminé, est de L2, alors le tube en verre et la tige en verre sont façonnés et allongés en une unité unique afin de satisfaire à l'équation :

$$0{,}1 \leq L1 / (L1+L2) \leq 0{,}8.$$

3. Méthode de fabrication d'une ébauche en fibre optique selon la revendication 1 ou la revendication 2, dans laquelle,
   si le diamètre extérieur du tube en verre est de D0 et le diamètre intérieur du tube en verre est de d0, et
   si le diamètre extérieur du tube en verre est de D1 et le diamètre intérieur du tube en verre est de d1 à la position à laquelle le tube en verre et la tige en verre deviennent une unité unique, alors
   le tube en verre et la tige en verre sont façonnés et allongés en une unité unique afin de satisfaire à l'équation :
   $(d0/D0) / (d1/D1) \leq 2.$

# FIG. 1

# FIG. 2

# FIG. 3

## FIG. 4

| | variable | Conv. Ex. 1 | Work. Ex. 1 | Work. Ex. 2 | Work. Ex. 3 | Work. Ex. 4 | Work. Ex. 5 | Comp. Ex. 1 | Conv. Ex. 2 | Work. Ex. 6 | Work. Ex. 7 | Work. Ex. 8 |
|---|---|---|---|---|---|---|---|---|---|---|---|---|
| pipe outer diameter | D0 | 67.0 | 48.0 | 67.0 | 67.0 | 67.0 | 67.0 | 67.0 | 170.0 | 170.0 | 166.0 | 170.0 |
| pipe inner diameter | d0 | 23.0 | 24.0 | 23.0 | 23.0 | 23.0 | 23.0 | 23.0 | 55.0 | 55.0 | 66.0 | 55.0 |
| rod diameter | d | 19.0 | 13.0 | 19.0 | 19.0 | 19.0 | 19.0 | 19.0 | 45.0 | 45.0 | 41.6 | 45.0 |
| pipe inner/outer diameter ratio | d0/D0 | 0.34 | 0.50 | 0.34 | 0.34 | 0.34 | 0.34 | 0.34 | 0.32 | 0.32 | 0.40 | 0.32 |
| pipe outer diameter | D1 | 65.7 | 41.0 | 51.2 | 60.3 | 58.2 | 48.4 | 44.0 | 167.0 | 157.5 | 128.2 | 98.6 |
| pipe inner diameter (=rod diameter) | d1 | 19.0 | 12.2 | 14.8 | 17.4 | 16.8 | 14.0 | 12.7 | 45.0 | 42.4 | 33.8 | 26.6 |
| pipe inner/outer diameter ratio | d1/D1 | 0.29 | 0.30 | 0.29 | 0.29 | 0.29 | 0.29 | 0.29 | 0.27 | 0.27 | 0.26 | 0.27 |
| pipe outer diameter | D2 | 44.0 | 30.0 | 44.0 | 44.0 | 44.0 | 44.0 | 44.0 | 60.0 | 60.0 | 60.0 | 60.0 |
| pipe inner diameter (=rod diameter) | d2 | 12.7 | 9.0 | 12.7 | 12.7 | 12.7 | 12.7 | 12.7 | 16.2 | 16.2 | 15.8 | 16.2 |
| pipe inner/outer diameter ratio | d2/D2 | 0.29 | 0.30 | 0.29 | 0.29 | 0.29 | 0.29 | 0.29 | 0.27 | 0.27 | 0.26 | 0.27 |
| ratio of pipe inner/outer diameter ratios | $\frac{(d0/D0)}{(d1/D1)}$ | 1.19 | 1.68 | 1.19 | 1.19 | 1.19 | 1.19 | 1.19 | 1.20 | 1.20 | 1.51 | 1.20 |
| initial stretching position to integrated position | L1 | 0 | 38 | 43 | 18 | 22 | 89 | 210 | 0 | 66 | 140 | 377 |
| integrated position to final stretching position | L2 | 85 | 79 | 88 | 92 | 89 | 22 | 0 | 400 | 344 | 245 | 33 |
| ratio of distance to integrated position over total distance | L1/(L1+L2) | 0.00 | 0.32 | 0.33 | 0.16 | 0.20 | 0.80 | 1.00 | 0.00 | 0.17 | 0.36 | 0.92 |
| pipe pressure reduction level (kPa) | | 100.0 | 13.3 | 13.3 | 53.3 | 26.6 | 6.7 | 3.3 | 100.0 | 40.0 | 13.3 | 3.3 |
| heating temperature of stretching furnace (°C) | | 2250 | 2250 | 2250 | 2250 | 2250 | 2250 | 2250 | 2250 | 2250 | 2250 | 2250 |
| feed rate of pipe into furnace (mm/min) | | 10.0 | 8.0 | 10.0 | 10.0 | 10.0 | 10.0 | 10.0 | 10.0 | 10.0 | 10.0 | 10.0 |
| draw rate of stretched preform (mm/min) | | 22.3 | 16.9 | 22.3 | 22.3 | 22.3 | 22.3 | 22.3 | 77.5 | 77.5 | 69.3 | 77.5 |
| bubbles in preform (per 100mm of preform) | | 0 | 0 | 0 | 0 | 0 | 2 | 124 | 0 | 1 | 1 | 12 |
| mode field eccentricity amount of optical fiber (μm) | | 1.41 | 0.20 | 0.19 | 0.22 | 0.20 | 0.18 | 0.19 | 2.22 | 0.33 | 0.28 | 0.29 |

EP 1 203 755 B1

# FIG. 5

| | variable | Conv. Ex. 1 | Work. Ex. 9 | Work. Ex. 10 | Work. Ex. 11 | Work. Ex. 12 | Conv. Ex. 2 | Work. Ex. 13 | Work. Ex. 14 |
|---|---|---|---|---|---|---|---|---|---|
| pipe outer diameter | D0 | 67.0 | 67.0 | 67.0 | 67.0 | 67.0 | 170.0 | 170.0 | 170.0 |
| pipe inner diameter | d0 | 23.0 | 23.0 | 23.0 | 23.0 | 23.0 | 55.0 | 55.0 | 55.0 |
| rod diameter | d | 19.0 | 6.0 | 10.8 | 13.3 | 21.0 | 45.0 | 25.0 | 50.0 |
| pipe inner/outer diameter ratio | d0/D0 | 0.34 | 0.34 | 0.34 | 0.34 | 0.34 | 0.32 | 0.32 | 0.32 |
| pipe outer diameter | D1 | 65.7 | 54.0 | 55.2 | 56.9 | 59.2 | 167.0 | 128.0 | 149.5 |
| pipe inner diameter (=rod diameter) | d1 | 19.0 | 5.1 | 9.3 | 11.8 | 18.7 | 45.0 | 19.7 | 44.4 |
| pipe inner/outer diameter ratio | d1/D1 | 0.29 | 0.09 | 0.17 | 0.21 | 0.32 | 0.27 | 0.15 | 0.30 |
| pipe outer diameter | D2 | 44.0 | 44.0 | 44.0 | 44.0 | 44.0 | 60.0 | 60.0 | 60.0 |
| pipe inner diameter (=rod diameter) | d2 | 12.7 | 4.2 | 7.4 | 9.1 | 13.9 | 16.2 | 9.2 | 17.8 |
| pipe inner/outer diameter ratio | d2/D2 | 0.29 | 0.09 | 0.17 | 0.21 | 0.32 | 0.27 | 0.15 | 0.30 |
| ratio of pipe inner/outer diameter ratios | $\frac{(d0/D0)}{(d1/D1)}$ | 1.19 | 3.62 | 2.03 | 1.66 | 1.08 | 1.20 | 2.11 | 1.09 |
| initial stretching position to integrated position | L1 | 0 | 77 | 62 | 54 | 32 | 0 | 140 | 94 |
| integrated position to final stretching position | L2 | 85 | 138 | 121 | 108 | 125 | 400 | 270 | 271 |
| ratio of distance to integrated position over total distance | L1/(L1+L2) | 0.00 | 0.36 | 0.34 | 0.33 | 0.20 | 0.00 | 0.34 | 0.26 |
| pipe pressure reduction level (kPa) | | 100.0 | 13.3 | 13.3 | 13.3 | 13.3 | 100.0 | 13.3 | 13.3 |
| heating temperature of stretching furnace (°C) | | 2250 | 2250 | 2250 | 2250 | 2250 | 2250 | 2250 | 2250 |
| feed rate of pipe into furnace (mm/min) | | 10.0 | 10.0 | 10.0 | 10.0 | 10.0 | 10.0 | 10.0 | 10.0 |
| draw rate of stretched preform (mm/min) | | 22.3 | 20.6 | 21.1 | 21.4 | 22.7 | 77.5 | 73.6 | 78.8 |
| bubbles in preform (per 100mm of preform) | | 0 | 1 | 1 | 0 | 1 | 0 | 0 | 1 |
| mode field eccentricity amount of optical fiber ($\mu$m) | | 1.41 | 0.49 | 0.44 | 0.21 | 0.19 | 2.22 | 0.42 | 0.28 |

# FIG. 6

# FIG. 7

# FIG. 8

△ fiber eccentricity amount
■ bubbles

# FIG. 9

# FIG. 10

# FIG. 11

# FIG. 12

# FIG. 13

# FIG. 14

# FIG. 15

# FIG. 16

| item | variable | unit | Work. Ex. (corresponds to FIG. 10) | Comp. Ex. 1 (corresponds to FIG. 13) | Comp. Ex. 2 (corresponds to FIG. 12) | Comp. Ex. 3 (corresponds to FIG. 15) |
|---|---|---|---|---|---|---|
| VAD rod outer diameter | d | (mm) | 32.0 | 32.0 | 48.0 | 48.0 |
| core diameter | | (mm) | 8.65 | 8.65 | 12.47 | 12.15 |
| VAD rod C/C | | | 3.70 | 3.70 | 3.85 | 3.95 |
| | | | | | | |
| pipe inner diameter | | (mm) | 53.0 | 53.0 | 70.0 | 55.0 |
| clearance | | (mm) | 10.5 | 10.5 | 11.0 | 3.5 |
| rod feed rate | $V_R$ | (mm/min) | 18.5 | 10.0 | 10.0 | 10.0 |
| pipe feed rate | $V_P$ | (mm/min) | 10.0 | 10.0 | 10.0 | 10.0 |
| pipe outer diameter | | (mm) | 168.5 | 168.5 | 189.0 | 175.1 |
| (rod/pipe) feed rate ratio | $V_R/V_P$ | | 1.85 | 1.0 | 1.0 | 1.0 |
| | | | | | | |
| outer diameter at integrated position | | | 115.4 | 107.2 | 128.0 | 122.8 |
| rod diameter at integrated position | d1 | (mm) | 30.3 | — | — | — |
| rod diameter at integrated position | d1′ | (mm) | — | 21.0 | 33.8 | 34.1 |
| completed preform C/C | | | 14.1 | 18.9 | 14.6 | 14.2 |
| target preform C/C | | | 14.2 | 14.2 | 14.4 | 14.4 |
| | | | | | | |
| cut-off wavelength | | ($\mu$m) | 1.270 | 1.700 | 1.298 | 1.266 |
| bubbles in preform | (per 100 mm length of preform) | | 0 | 0 | 0 | 67 |
| mode field eccentricity amount of optical fiber | | ($\mu$m) | 0.25 | unknown | 1.22 | 0.24 |

EP 1 203 755 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7010580 B
- JP S5645867 B
- JP S5085345 A
- JP H0710580 A